# EUROPEAN PATENT APPLICATION

(11) **EP 2 199 257 A2**
(43) Date of publication of application: **23.06.2010**
(21) Application number: 09180165.4
(22) Date of filing: 21.12.2009
(51) Int. Cl.: C01B 17/16, C01B 17/20, C01B 19/00, C01B 19/04, C01C 3/16, C01G 9/08, C07C 253/20

(54) **Process for in situ generation of hydrogen sulfide or hydrogen selenide gas using a solid precursor**

(30) Priority: 19.12.2008 US 203210 P
(71) Applicant: THE BOARD OF TRUSTEES OF THE LELAND STANFORD JUNIOR UNIVERSITY, Palo Alto, CA 94306-1106 (US)
(72) Inventor: Bent, Stacey, Stanford, CA 94305 (US); King, Jeffrey S., Menlo Park, CA 94025 (US); Bakke, Jonathan R., Stanford, CA 94305 (US)
(74) Representative: Vossius & Partner

(57) **Abstract**

The present disclosure relates to novel methods and apparatuses for generating hydrogen sulfide or hydrogen selenide gas from decomposition of a solid precursor. In some embodiments, the generated gas is cooled so as to condense a by-product of the decomposition and thereby increasing the purity of the gas. In some embodiments, the generated hydrogen sulfide or hydrogen selenide gas is used to prepare metal sulfide or metal selenide films.

## Description

This application claims the benefit of U.S. Provisional Patent Application 61/203,210, filed December 19, 2008, which is incorporated by reference herein in its entirety.

Hydrogen sulfide (H₂S) is a highly reactive, flammable gas used in processing of sulfide-based semiconductors for photovoltaic and display applications. It is heavier than air, has a flammability limit of 4%, and is highly toxic. H₂S (g) is used for sulfidization, the process of converting a metal or metal oxide material to a metal sulfide. In addition, it is used in chemical vapor deposition and atomic layer deposition in conjunction with a metal precursor to grow metal sulfide films. It is also used in annealing sulfide-based phosphor materials to maintain or modify sulfur content.

Hydrogen sulfide gas is commonly supplied in compressed gas cylinders, either in pure form, or diluted with inert gases such as nitrogen or argon. There exists a need in the art for a method for generating hydrogen sulfide gas on an as-needed basis that is convenient and safe.

In one aspect, the present disclosure provides for a method for preparing hydrogen sulfide gas, comprising heating a solid sulfur-containing precursor (e.g., thioacetamide, thiourea) to decomposition, thereby producing hydrogen sulfide gas, and cooling the generated hydrogen sulfide gas to condense a by-product of the decomposition (e.g., acetonitrile, cyanamide).

In some embodiments, the hydrogen sulfide gas is cooled by a cold trap. In some embodiments, the generated hydrogen sulfide gas is substantially pure after the cooling step.

In some embodiments, the thioacetamide is heated to a temperature above 115 °C.

In some embodiments, the thiourea is heated to a temperature above 176 °C.

In some embodiments, the hydrogen sulfide gas is cooled to a temperature that is above -60 °C.

In some embodiments, the solid sulfur-containing precursor is subjected to a vacuum prior to heating.

In some embodiments, the hydrogen sulfide gas is used for sulfidization of a metal and/or a metal oxide film to yield a metal sulfide film, or for deposition of a metal sulfide film, for example, by atomic layer deposition. To that extent, the present invention also encompasses a method for forming a metal sulfide film, comprising the preparation of hydrogen sulfide in accordance with the respective aspect discussed above, and further comprising (i) the sulfidization of a metal and/or metal oxide film to yield the metal sulfide film or (ii) the deposition of a metal sulfide film.

In one aspect, the present disclosure provides for a method for preparing hydrogen selenide gas, comprising heating a solid selenium-containing precursor (e.g., selenoacetamide, selenourea) to decomposition, thereby producing hydrogen selenide gas, and cooling the generated hydrogen selenide gas to condense a by-product of the decomposition (e.g., acetonitrile, cyanamide).

In some embodiments, the hydrogen selenide gas is cooled by a cold trap. In some embodiments, the generated hydrogen selenide gas is substantially pure after the cooling step.

In some embodiments, the selenoacetamide is heated to a temperature above 126 °C.

In some embodiments, the selenourea is heated to a temperature above 210 °C.

In some embodiments, the hydrogen selenide gas is cooled to a temperature that is above -41 °C.

In some embodiments, the solid selenium-containing precursor is subjected to a vacuum prior to heating.

In some embodiments, the hydrogen selenide gas is used for selenization of a metal and/or a metal oxide film to yield a metal selenide film, or for deposition of a metal selenide film for example, by atomic layer deposition. Thus, the present invention also encompasses a method for forming a metal selenide film, comprising the preparation of hydrogen selenide in accordance with the respective aspect discussed above, and further comprising (i) the selenization of a metal and/or metal oxide film to yield a metal selenide film, or (ii) the deposition of a metal selenide film.

In one aspect, the present disclosure provides for an apparatus for generating hydrogen sulfide (or hydrogen selenide), comprising a generation chamber; a heating element for heating or capable of heating a solid sulfur-containing (or selenium-containing) precursor in the generation chamber to a decomposition temperature, thereby producing hydrogen sulfide (or hydrogen selenide) gas; and a cooling apparatus for cooling or capable of cooling the hydrogen sulfide gas (or hydrogen selenide gas) to condense a by-product present in the hydrogen sulfide gas (or hydrogen selenide gas).

In certain embodiments, the present disclosure provides methods for preparing a metal sulfide or metal selenide film on a substrate comprising: a) generating hydrogen sulfide or hydrogen selenide gas by heating a solid sulfur-containing precursor or solid selenium-containing precursor to decomposition; b) delivering the hydrogen sulfide or hydrogen selenide gas into a reactor that includes a substrate; c) purging the reactor with an inert purge gas; d) delivering a metal-containing counter-reactant into the reactor; e) purging the reactor with an inert purge gas; and f) optionally repeating steps a-e or b-e; to prepare a metal sulfide or metal selenide film on the substrate.

In some instances, the metal sulfide or metal selenide films are of high purity, such as greater than about 90%, 95%, 97%, 99%, 99.9%, 99.99%, or 99.999% pure. In certain embodiments, the metal film is a metal sulfide film, such as a transition metal sulfide film, such as zinc sulfide.
Figure 1 shows an embodiment of an apparatus for carrying out the methods recited herein.
Figure 2 illustrates an exemplary process for atomic layer deposition of metal sulfide or metal selenide film employing hydrogen sulfide or hydrogen selenide generated by the methods recited herein.
Figure 3 depicts X-ray photoelectron spectroscopy results of zinc sulfide film prepared by the methods recited herein.
Figure 4 depicts X-ray diffraction results of zinc sulfide film prepared by the methods recited herein.
Figure 5 depicts bandgap data for zinc sulfide film prepared by the methods recited herein.

### I. Overview

The present disclosure relates to methods of preparing hydrogen sulfide gas by heating a solid sulfur-containing precursor (e.g., a thiocarbonyl-containing compound, such as thioacetamide or thiourea) to decomposition, e.g., under a reduced-pressure and/or inert atmosphere. In certain embodiments, the generated hydrogen sulfide gas may be used for growth of metal sulfide films, for example, by atomic layer deposition, or for sulfidization of metal (e.g., Cu, Zn, Sn) and/or metal oxide and/or metal oxysulfide films to yield metal sulfide films.

According to an exemplary embodiment, it was found that heating thioacetamide above its melting point in an inert environment results in thermal decomposition to two principal products: acetonitrile (CH₃CN) and hydrogen sulfide (H₂S).

The present disclosure also relates to a method for preparing hydrogen selenide gas, comprising heating a solid selenium-containing precursor (e.g., a selenocarbonyl-containing compound, such as selenoacetamide or selenourea) to decomposition. In certain embodiments, the generated hydrogen selenide gas may be used for growth of metal selenide films, for example, by atomic layer deposition, or for selenization of metal and/or metal oxide film to yield metal selenide films.

Solid precursors described herein may be heated in a generation chamber or heating chamber, such as a glass or metal vial, flask, or other suitable container. The heating chamber is connected to an apparatus that stores, delivers, or utilizes gas (e.g., H₂S gas, H₂Se gas), such as a gas delivery unit of a sulfidization furnace or a thin-film deposition system. The heating chamber may be coupled to the apparatus, e.g., the gas delivery unit, through a shut-off valve and/or a metering valve. A pressure gauge may be operatively coupled to the heating chamber to monitor the amount of generated gas and/or the pressure in the chamber. The solid precursor may be heated using any type of heating device. In some embodiments, all or part of the chamber is a heating element (e.g., metal/ceramic heating element). In some embodiments, the heating chamber is heated from an external source, e.g., a silicone oil bath or a resistive heating element jacket. In still other embodiments, a heating element is placed in the heating chamber, e.g., adjacent to the solid precursor. Prior to heating the solid precursor, the chamber may be subjected to a vacuum. The solid precursor may be heated to a temperature between ambient temperature (e.g., 20 °C) and the melting point of the solid precursor, e.g., in order to remove volatile and/or gaseous impurities from the heating chamber. The heating chamber may then be isolated from the vacuum by closing a shut-off valve that separates it from the vacuum source. In this way, the gaseous decomposition products may be produced in an environment substantially free of other gaseous materials.

In order to achieve thermal decomposition, the solid precursor is generally heated to a temperature above its melting point. The melting point of the solid precursor may vary depending upon the pressure to which it is subjected. Thus, the precursor may be heated to a temperature above its melting point at a given pressure to which it is subjected. In certain embodiments in which the solid precursor is thioacetamide, and the thioacetamide is subjected to ambient pressure, for example, the thioacetamide may be heated to a temperature above 115 °C (e.g., over about 120 °C, 130 °C, 150 °C, 170 °C, 190 °C, etc., e.g., up to about 200 °C, 250 °C, or 300 °C). In certain embodiments in which the solid precursor is thiourea, and the thiourea is subjected to ambient pressure, for example, the thiourea may be heated to a temperature above 176 °C (e.g., over about 185 °C, 195 °C, 215 °C, 235 °C, 255 °C, etc., up to about 250 °C, 300 °C, or 350 °C). In certain embodiments in which the solid precursor is selenoacetamide, and the selenoacetamide is subjected to ambient pressure, for example, the selenoacetamide may be heated to a temperature above 126 °C (e.g., over about 130°C, 140 °C, 160 °C, 180 °C, 200 °C, etc., e.g., up to about 210 °C, 250 °C, or 300 °C). In certain embodiments in which the solid precursor is selenourea, and the selenourea is subjected to ambient pressure, for example, the selenourea may be heated to a temperature above 210 °C (e.g., over about 215 °C, 225 °C, 245 °C, 265 °C, 285 °C, etc., e.g., up to about 280 °C, 330 °C, or 380 °C). The temperature may be varied to modulate the rate of generation of H₂S or H₂Se gas. Thermal decomposition may be continued until decomposition of the solid precursor yields the desired quantity of gas.

The gaseous decomposition products may be cooled to condense any gaseous precursor molecules and less volatile by-products of the decomposition, such as acetonitrile and cyanamide, thereby purifying the hydrogen sulfide or hydrogen selenide component. Condensing a by-product of the decomposition may include a transition from a gas to a liquid, or a transition from a gas to a solid (e.g., deposition). In certain embodiments, the generated hydrogen sulfide or hydrogen selenide gas is substantially pure after the cooling step. The gas may be cooled, e.g., by using a thermoelectric cooler or an appropriate bath. For example, a separate cold trap may be connected to the apparatus, and the gaseous decomposition products may be passed through and/or stored in the cold trap prior to dispensing for further use. Alternatively, the heating chamber itself can be cooled, e.g., following thermal decomposition, prior to releasing the generated gases from the chamber. Any arrangement of the heating chamber and a cooling apparatus that permits the gaseous products to be cooled prior to further use is contemplated by the subject methods.

In certain embodiments, the gas may be cooled to a temperature that is above the boiling point of the product gas in order to increase the purity of the gas. In certain embodiments, the hydrogen sulfide gas may be cooled to a temperature that is above the boiling point of H₂S under the conditions of the system (e.g., -60 °C at atmospheric pressure, a lower temperature if the pressure is below atmospheric, or a higher temperature if the pressure is above atmospheric). In certain embodiments, the hydrogen selenide gas may be cooled to a temperature that is above the boiling point of H₂Se under the conditions of the system (e.g., -41 °C at atmospheric pressure, a lower temperature if the pressure is below atmospheric, or a higher temperature if the pressure is above atmospheric). Alternatively, the entire product gas can be condensed and the product gas (e.g., hydrogen sulfide or hydrogen selenide) distilled from the other components. In certain embodiments, the gas may be cooled to a temperature below the boiling point of acetonitrile under the conditions of the system (e.g., 82 °C at atmospheric pressure, a lower temperature if the pressure is below atmospheric, or a higher temperature if the pressure is above atmospheric), *i.e.,* to at least condense and/or liquefy acetonitrile. In certain embodiments, the gas may be cooled to a temperature below the boiling point of cyanamide under the conditions of the system (e.g., 45 °C at atmospheric pressure, a lower temperature if the pressure is below atmospheric, or a higher temperature if the pressure is above atmospheric), *i.e.,* to at least condense and/or liquefy cyanamide.

In certain embodiments, the optionally purified hydrogen sulfide or hydrogen selenide gas may be transferred to a collection chamber, e.g., via a shutoff valve or a metering valve.

In certain embodiments, the product hydrogen sulfide gas may be combined with a metal precursor (e.g., metal halide, organometallic) to grow metal sulfide films, e.g., under conditions well known in the art for using hydrogen sulfide from other sources, for example, by atomic layer deposition. In certain embodiments, the product hydrogen sulfide gas may be used for sulfidization of metal and/or metal oxide film to yield metal sulfide films, e.g., under conditions well known in the art for using hydrogen sulfide from other sources.

Similarly, in certain embodiments, hydrogen selenide gas may be combined with a metal precursor (e.g., metal halide, organometallic) to grow metal selenide films, for example, by atomic layer deposition. In certain embodiments, hydrogen selenide gas may be used for selenization of metal and/or metal oxide film to yield metal selenide films.

In certain embodiments, the hydrogen sulfide or hydrogen selenide gas that is produced by the above methods is substantially pure and is utilized in substantially pure form in the preparation of metal sulfide or metal selenide films (e.g., by atomic layer deposition) or in the sulfidization or selenization of metal and/or metal oxide films to yield metal sulfide or metal selenide films. In other embodiments, the hydrogen sulfide or hydrogen selenide gas that is produced by the above methods is diluted with a diluting gas and is utilized in dilute form in the production of metal metal sulfide or metal selenide films. For example, the diluting gas may be an inert gas, such as a noble gas, e.g., argon, or nitrogen. In other embodiments, the substantially pure hydrogen sulfide or hydrogen selenide gas may be diluted with a reducing gas, such as hydrogen. The substantially pure hydrogen sulfide or hydrogen selenide gas may be diluted to a level of purity that is equal to or less than about 95, 90, 80, 70, 60, 50, 40, 30, or even 20%.

### II. Definitions

The term "substantially pure" or "purified" is defined as encompassing preparations having less than 20% (v/v) of a gas other than hydrogen sulfide or hydrogen selenide, such as by-products of the reaction, and preferably having less than 5% of contaminant gases. The substantially pure hydrogen sulfide or hydrogen selenide is preferably at least 80% pure by volume, at least 90% pure by volume, or more preferably greater than or equal to 95% by volume, such as in the range of 95-99% by volume, and most preferably at least 99.8% by volume.

### III. Example Apparatus

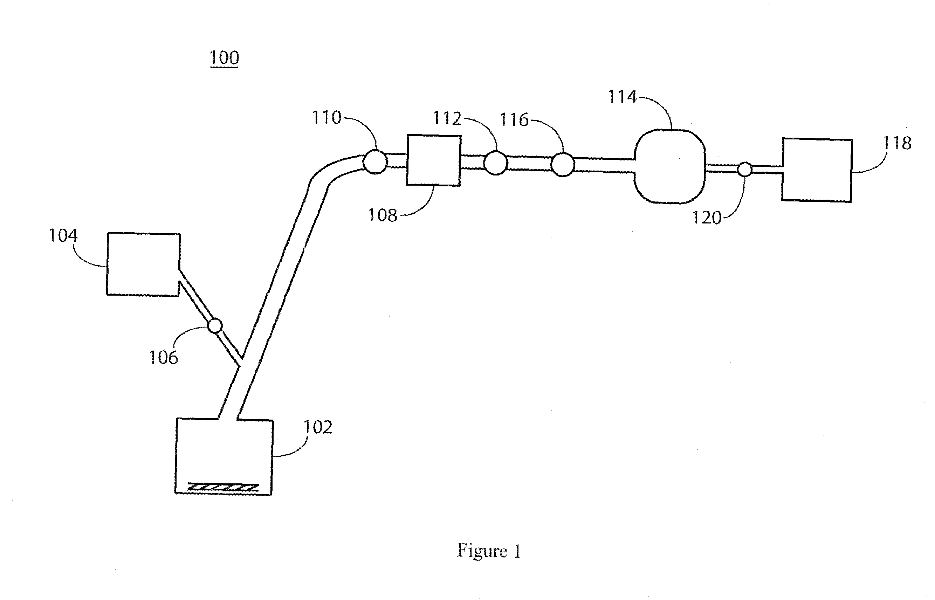

Figure 1 shows an example apparatus 100 for the generation of hydrogen sulfide or hydrogen selenide gas according to the methods provided herein. In this exemplary apparatus, the solid precursor (e.g., solid sulfur-containing precursor or solid selenium-containing precursor) is heated in the generation chamber or heating chamber 102, which may comprise any suitable material or dimension, preferably selected so as to be substantially non-reactive with hydrogen sulfide or hydrogen selenide gas. In some embodiments, the heating chamber has dimensions of about 5 cm³ to about 50,000 cm³ (i.e., 50 L) for example, from about 10, 15, 20, 50, 100, 500, 1000, 5000 cm³ to about 25,000, 10,000, 5,000, 1,000, 500, 250, 100, 75, 50, or 25 cm³, such as about 25 cm³ +/- 1 cm³.

The apparatus 100 may optionally include a pressure gauge 104 to measure the amount of generated gas. The pressure gauge 104 may be connected to the apparatus 100 by a shut-off valve 106.

The apparatus 100 further comprises an optional cooling apparatus, such as a condenser 108, that may cool and/or condense the gaseous decomposition products, for example at temperatures discussed in greater detail above. In alternative embodiments, the heating chamber 102 can also include or function as a cooling apparatus, eliminating the need for a separate cooling apparatus, and in such embodiments, the condenser 108 is absent. The condenser 108 (or the heating chamber 102 when the produced gas is cooled in the heating chamber) may be cooled by any method known to those of skill in the art. Cooling of the generated gas may condense one or more impurities (e.g., precursor compound and/or by-products of the decomposition, such as acetonitrile or cyanamide) from the gas. An optional shut-off valve 110 may be placed between the heating chamber 102 and the condenser 108. In certain embodiments, the condenser 108 is instead a separate storage vessel, such as a holding tank. In such embodiments, the hydrogen sulfide or hydrogen selenide gas is generated in the heating chamber 102 as described above; the heating chamber is then cooled to condense decomposition products resulting in substantially pure hydrogen sulfide or hydrogen selenide gas, and the substantially pure hydrogen sulfide or hydrogen selenide gas is then released to the holding tank 108, e.g., by way of the shut-off valve 110.

In some instances, the apparatus 100 further includes an optional gas delivery unit 114, which is in fluid communication with the heating chamber 102 by way of the condenser 108 (if present). The gas delivery unit 114 may provide one or multiple outlets by which the produced hydrogen sulfide or hydrogen selenide gas can be delivered. In some instances the gas delivery unit 114 is a gas delivery manifold, such as the kind typically employed in handling of gases, for example, including a plurality of outlets, each with adjustable valves to regulate the dispensing of gas. Another optional shut-off valve 112 may be placed between the condenser 108 and the gas delivery unit 114. The gas delivery unit 114 may store or utilize the generated gas. For example, the gas delivery unit 114 may in some instances be associated with a reactor (not pictured) in which the gas is to be utilized. In alternative embodiments, the gas delivery unit 114 can be replaced by a storage vessel, a reaction vessel, or any suitable vessel for subsequent use or storage of the purified gas, or may be omitted altogether (e.g., the product gas can be stored in or dispensed directly from the condenser 108 or the heating chamber 102 as desired). The storage vessel 114 (or the storage vessel 108 when used in place of a condenser) may comprise any suitable material or dimension, preferably selected so as to be substantially non-reactive with hydrogen sulfide or hydrogen selenide gas. In some embodiments, the storage vessel has dimensions of about 5 cm³ to about 100,000 cm³ (i.e., 100 L) for example, from about 10, 15, 20, 50, 100, 500, 1000, 5000 cm³ to about 50,000, 25,000, 10,000, 5,000, 1,000, 500, 250, 100, 75, or 50, cm³, such as about 50 cm³ +/- 1 cm³.

An optional metering valve 116 (e.g., a needle valve optionally including a mass flow controller for controlling the amount of generated gas delivered) may be placed between the condenser 108 and the gas delivery unit 114 to regulate the flow of gas. An optional vacuum source 118 may be connected to the gas delivery unit 114. The vacuum source 118 may provide a vacuum in the apparatus. While under vacuum, the solid precursor may be heated to a temperature between ambient temperature and the melting point of the solid precursor in order to remove impurities from the heating chamber. An optional shut-off valve 120 may be placed between the gas delivery unit 114 and the vacuum source 118. In some instances, the shut-off valve 120 is replaced by a solenoid valve. In certain embodiments, the vacuum source 118 is associated with a reactor in which the gas is utilized.

In a first embodiment, the apparatus 100 includes the heating chamber 102, the pressure gauge 104, the shut-off valve 110, and a needle valve 116. In some embodiments, the needle valve 116 is then associated with a reactor in which the generated hydrogen sulfide or hydrogen selenide gas is utilized. In some instances, the reactor may include a vacuum source that is in fluid communication with the apparatus 100. The heating chamber 102 of the first embodiment may be used to generate hydrogen sulfide or hydrogen selenide gas, as described above, and to store the hydrogen sulfide or hydrogen selenide gas, at least temporarily, that is generated therein. Such storage may follow cooling the gas produced to condense the gaseous decomposition products. For example, in one embodiment, the apparatus 100 is used to produce hydrogen sulfide or hydrogen selenide gas, which is utilized in a batch process, for example, by first generating the gas in the heating chamber 102, then cooling the heating chamber to condense the gaseous decomposition products thereby resulting in substantially pure hydrogen sulfide or hydrogen selenide gas, then dispensing the hydrogen sulfide or hydrogen selenide gas by way of the shut-off valve 110 and the needle valve 116 to a reactor or other place for use of the gas or to a storage vessel. Such embodiments facilitate batch processing of the hydrogen sulfide or hydrogen selenide gas.

In a second embodiment, the apparatus 100 includes the heating chamber 102, the pressure gage 104, the shut-off valve 110, a storage vessel 108, a shut-off valve 112, a needle valve 116, and a solenoid valve 120. In some embodiments, the solenoid valve 120 is then associated with a reactor in which the generated gas is utilized. In some instances, the reactor may include a vacuum source that is in fluid communication with the apparatus 100. The heating chamber 102 of the second embodiment may be used to generate hydrogen sulfide or hydrogen selenide gas, as described above, and to store the hydrogen sulfide or hydrogen selenide gas, at least temporarily, that is generated therein. Such storage may follow cooling the gas produced to condense the gaseous decomposition products. For example, in one embodiment, the apparatus 100 is used to produce hydrogen sulfide or hydrogen selenide gas, which is utilized in a continuous process, for example, by first generating the gas in the heating chamber 102, then cooling the heating chamber to condense the gaseous decomposition products thereby resulting in substantially pure hydrogen sulfide or hydrogen selenide gas, then dispensing the hydrogen sulfide or hydrogen selenide gas by way of the shut-off valve 110 to the storage vessel 108. The hydrogen sulfide or hydrogen selenide gas may then be utilized on-demand by withdrawing the gas from the storage vessel 108 as needed by way of the shut-off valve 112, the needle valve 116, and the solenoid valve 120 to a reactor or other place for use of the gas or even to another storage vessel. In such an embodiment, the heating chamber can be heated to produce additional hydrogen sulfide or hydrogen selenide gas, cooled to condense the decomposition products, and the substantially pure hydrogen sulfide or hydrogen selenide gas withdrawn to the storage vessel 108 to replenish hydrogen sulfide or hydrogen selenide gas that has been consumed from the storage vessel. It will be appreciated that hydrogen sulfide or hydrogen selenide gas can be dispensed from the apparatus 100 continuously from the storage vessel 108, and additional hydrogen sulfide or hydrogen selenide gas generated as necessary from the heating chamber 102 to replenish the gas consumed from the storage vessel. Such embodiments facilitate flow processing of the hydrogen sulfide or hydrogen selenide gas.

As noted above, in some instances, the hydrogen sulfide or hydrogen selenide gas produced by the above methods and apparatuses may be diluted prior to utilization, for example, prior to utilization in a reactor. In such instances, the apparatus 100 may include an optional inlet (not pictured) for introducing a diluting gas, such as an inert or reducing gas as described above, and that may be placed at any location in the apparatus, for example, (with reference to Figure 1 and moving from left to right) after the shut-off valve 110, after the condenser or storage vessel 108, after the heating chamber 102, after the shut-off valve 112, after the needle valve 116, after the gas delivery unit 114, or after the solenoid valve 120. In certain embodiments, the inlet is in fluid communication with the apparatus 100 at a point between the heating chamber 102 and a reactor that utilizes the hydrogen sulfide or hydrogen selenide. For example, in some embodiments, the inlet is located in between the gas delivery unit 114 and the solenoid valve 120. The inlet may also include a shut-off valve and/or a mass flow controller that regulates the amount of diluting gas delivered to the apparatus 100 and/or reactor.

### IV. Example Process for Preparation of Metal Sulfide or Selenide Films

In certain embodiments, the substantially pure hydrogen sulfide or hydrogen selenide prepared by the instant methods can be employed for the preparation of metal sulfide or metal selenide films, such as zinc sulfide or zinc selenide film. For example, hydrogen sulfide or hydrogen selenide may be prepared in an apparatus such as 100, which, in certain embodiments, is in fluid communication with a reactor that includes a substrate for deposition of the metal sulfide or metal selenide film. The hydrogen sulfide or hydrogen selenide gas may be delivered into the reactor, and excess hydrogen sulfide or hydrogen selenide gas may then be purged from the rector with an inert purge gas, such as a noble gas, e.g., argon, or in some instances by nitrogen. In some instances, the hydrogen sulfide or hydrogen selenide gas is delivered into the reactor in substantially pure form. In other instances, the hydrogen sulfide or hydrogen selenide gas is delivered in diluted form, for example, diluted with an inert or reducing gas as described above. Then a counter-reactant may be delivered into the reactor and the counter reactant may react with the hydrogen sulfide or hydrogen selenide gas that has associated with the substrate. In some embodiments, the counter-reactant is metal-containing or a metal precursor. Examples of metal-containing counter-reactants or metal precursors include metal salts, such as metal halides, and organometallics, such as alkylmetals, such as alkylzinc, such as diethylzinc. Reaction of a metal-containing counter-reactant or metal precursor with the hydrogen sulfide or hydrogen selenide on the substrate may form a metal sulfide or metal selenide film on the substrate. Subsequently, the reactor may be purged again with an inert purge gas to remove by-products as well as excess counter-reactant. The above steps may be repeated as necessary to deposit additional metal sulfide or metal selenide on the substrate to generate film with desired thickness and other properties.

In certain embodiments, the metal sulfide or metal selenide films prepared by the above process are of high purity, such as greater than about 90%, 95%, 97%, 99%, 99.9%, 99.99%, or 99.999% pure.

### Examples

### Process for Hydrogen Sulfide or Hydrogen Selenide Gas Generation

An exemplary process for H₂S (g) generation is described below:
1. A quantity of solid thioacetamide (CH₃CSNH₂) was placed inside a glass or metal vial (vial 1). Alternatively, thiourea may be used instead of thioacetamide. In another alternative configuration, selenium-containing precursors such as selenourea or selenoacetamide may be used to generate hydrogen selenide gas for growth of metal selenide films or selenization of metal and metal oxide films to yield metal selenide films.
2. Vial 1 was attached to the gas delivery manifold of a sulfidization furnace. Alternatively, vial 1 was attached to a thin film deposition system. It could also be attached to any other apparatus that utilizes H₂S gas.
3. Vial 1 was isolated from the manifold using a shut-off valve and a metering valve.
4. A pressure gauge attached to vial 1 was used to monitor the amount of generated gas.
5. Vial 1 was evacuated and then heated to 50 °C for 30 minutes using either a silicone oil bath or by a resistive heating element jacket.
6. Vial 1 was isolated from the vacuum by closing its valve and heated to 150 °C, a temperature significantly greater than the melting point of thioacetamide (∼125 °C).
7. Vial 1 was held at 150 °C until the desired quantity of gas was generated. In an alternate configuration, a separate cold trap may be used during delivery of H₂S (g) from vial 1 to condense and trap impurities, including vaporized acetonitrile, separately from the remaining thioacetamide and hydrogen sulfide gas.
8. Vial 1 was then cooled to room temperature. After cooling, vial 1 had a positive pressure, which depends on the quantity of gas produced.
9. The hydrogen sulfide gas was then introduced from vial 1 to the gas delivery manifold by opening the shutoff valve, and regulating the gas flow using the metering valve. In an alternate configuration, the output of vial 1 may be connected to a mass flow controller or a mass flow meter in order to achieve greater control of H₂S (g) flow rate.
10. The decomposition products were confirmed by quadrupole mass spectrometry.

The above process may also be used for the generation of H₂Se (g) by using an appropriate solid selenium-containing precursor in step 1 (e.g., selenoacetamide) and by employing temperatures as disclosed herein as appropriate for the remaining steps.

### Process for Atomic Layer Deposition of Metal Sulfide or Metal Selenide Films

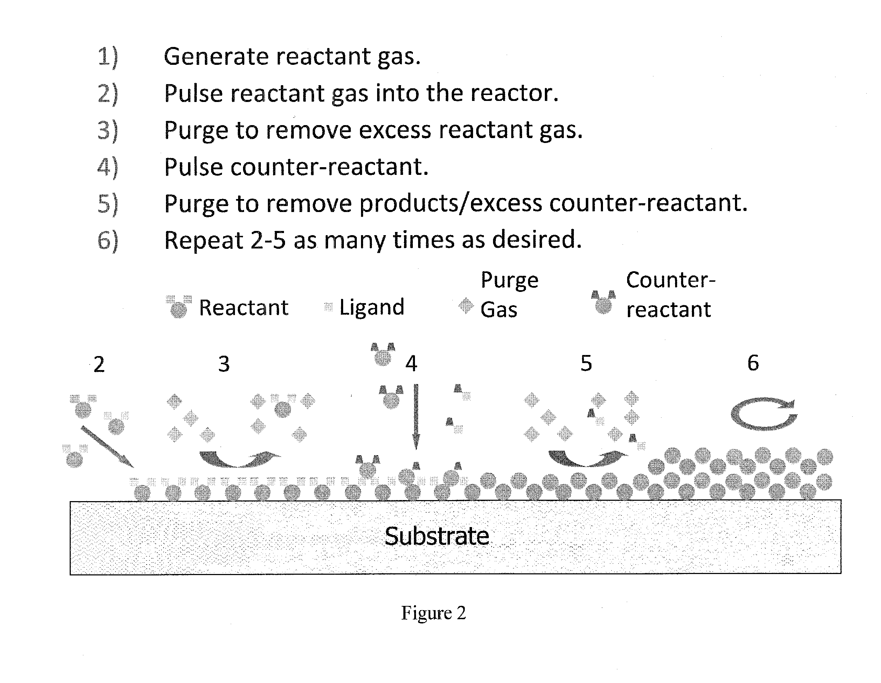

An exemplary process for atomic layer deposition of a metal sulfide film is described below and with reference to Figure 2:
1. Substantially pure H₂S gas (reactant) was generated, for example, by the above process.
2. The H₂S gas was delivered into a reactor, which includes a substrate for deposition of a metal sulfide film.
3. The reactor was purged with an inert purge gas to remove excess H₂S.
4. Diethylzinc (counter reactant) was delivered into the reactor.
5. The reactor was again purged with an inert purge gas to remove excess diethylzinc and reaction by-products, and a layer of zinc sulfide film was deposited on the substrate.
6. Steps 2-5 were repeated as desired to achieve zinc sulfide film of the desired thickness and properties.

The above process may also be used for atomic layer deposition of other metal sulfides by varying the metal-containing counter reactant. Additionally, metal selenide films, such as zinc selenide, may also be prepared by the above process by employing hydrogen selenide generated by the methods described above.

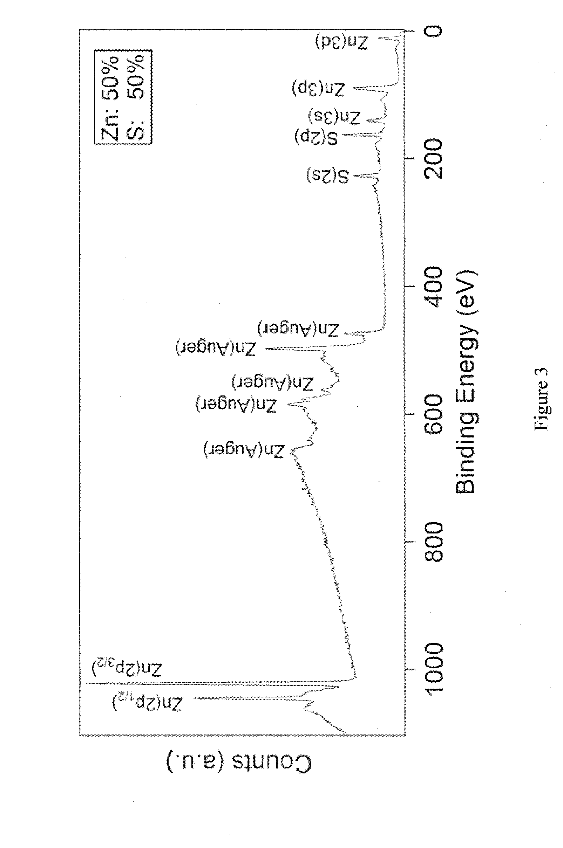

Figure 3 illustrates by X-ray photoelectron spectroscopy that the zinc sulfide produced in the above process is high purity as no diethylzinc or hydrogen sulfide precursors were observed, and no carbon or nitrogen was detected.

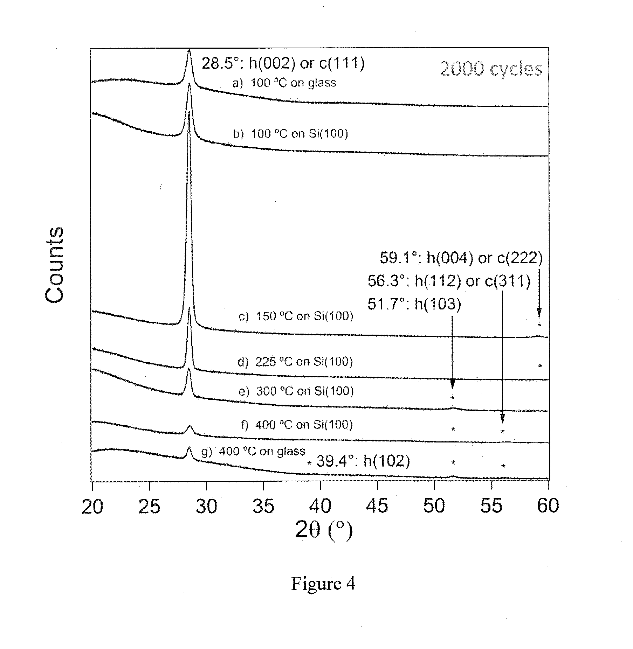

Figure 4 illustrates by X-ray diffraction that the zinc sulfide produced undergoes a phase change from cubic at low temperatures to a mix of zinc blend and wurtzite (hexagonal) at higher temperatures.

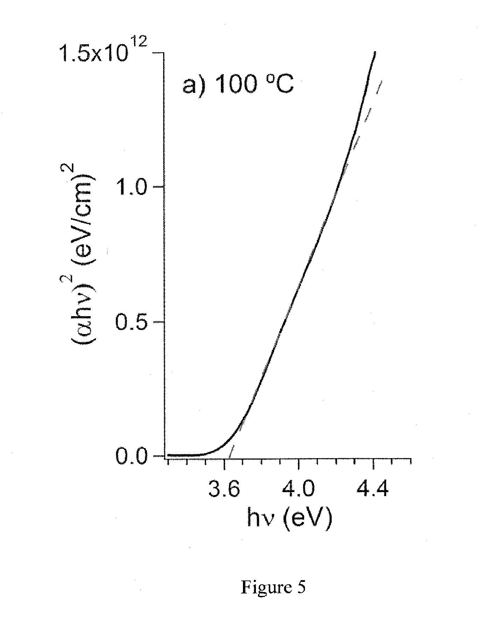

Figure 5 presents bandgap measurements (optical characterization by UV-Vis spectroscopy and Tauc plot analysis). As can be seen, the bandgap of the zinc sulfide produced by the above method was about 3.6 to 3.7 eV, which matches literature values for pure zinc sulfide deposited by a variety of techniques, thus demonstrating that the above method is effective for the generation of pure metal sulfide and metal selenide films.

Those skilled in the art will recognize, or be able to ascertain using no more than routine experimentation, numerous equivalents to the compounds and methods of use thereof described herein. Such equivalents are considered to be within the scope of the claimed invention and are covered by the following claims.

The contents of all references, patents and published patent applications cited throughout this Application, as well as their associated figures are hereby incorporated by reference in entirety.

## Claims

1. A method for preparing hydrogen sulfide or hydrogen selenide gas, comprising heating a solid sulfur-containing precursor or solid selenium-containing precursor to decomposition, thereby producing hydrogen sulfide or hydrogen selenide gas, and cooling the generated hydrogen sulfide gas or hydrogen selenide to condense a by-product of the decomposition.

2. The method of claim 1, wherein the generated hydrogen sulfide or hydrogen selenide gas is substantially pure after the cooling step.

3. The method of claim 1 or 2, wherein the solid sulfur-containing precursor is thioacetamide and the by-product is acetonitrile, and optionally wherein the thioacetamide is heated to a temperature above 115 °C.

4. The method of claim 1 or 2, wherein the solid sulfur-containing precursor is thiourea and the by-product is cyanamide, and optionally wherein the thiourea is heated to a temperature above 176 °C.

5. The method of any of claims 1 to 4, wherein the hydrogen sulfide gas is cooled to a temperature that is above -60 °C.

6. The method of any of claims 1 to 5, wherein the solid sulfur-containing precursor or selenium-containing precursor is subjected to a vacuum prior to heating.

7. The method of any of claims 1 to 6, wherein the hydrogen sulfide gas is used for sulfidization of a metal and/or a metal oxide film to yield a metal sulfide film.

8. The method of claim 1 or 2, wherein the solid selenium-containing precursor is selenoacetamide and the by-product is acetonitrile, and optionally wherein the selenoacetamide is heated to a temperature above 126 °C.

9. The method of claim 1 or 2, wherein the solid selenium-containing precursor is selenourea and the by-product is cyanamide, and optionally wherein the hydrogen selenide gas is cooled to a temperature that is above -41 °C.

10. The method of any of claims 1, 2, 8 or 9, wherein the hydrogen selenide gas is used for selenization of a metal and/or a metal oxide film to yield a metal selenide film.

11. The method of claim 1, wherein the method is for preparing hydrogen sulfide gas.

12. An apparatus for generating hydrogen sulfide or hydrogen selenide, comprising:
a) a generation chamber;
b) a heating element capable of heating a solid sulfur-containing or selenium-containing precursor in the generation chamber to a decomposition temperature to thereby produce hydrogen sulfide or hydrogen selenide gas; and
c) a cooling apparatus capable of cooling the hydrogen sulfide or hydrogen selenide gas to condense a by-product present in the hydrogen sulfide or hydrogen selenide gas.

13. The apparatus of claim 12, wherein the generation chamber includes or functions as the cooling apparatus, and optionally
further comprising a storage vessel capable of storing and dispensing hydrogen sulfide or hydrogen selenide gas produced in the generation chamber.

14. A method for preparing a metal sulfide or metal selenide film on a substrate comprising:
a) generating hydrogen sulfide or hydrogen selenide gas by heating a solid sulfur-containing precursor or solid selenium-containing precursor to decomposition;
b) delivering the hydrogen sulfide or hydrogen selenide gas into a reactor that includes a substrate;
c) purging the reactor with an inert purge gas;
d) delivering a metal-containing counter-reactant into the reactor;
e) purging the reactor with an inert purge gas;
f) optionally repeating steps a-e or b-e;
to prepare a metal sulfide or metal selenide film on the substrate.

15. The method of claim 14, wherein the metal sulfide or metal selenide film is over about 99% pure.
